# FASCICULE DE BREVET EUROPEEN

(11) **EP 0 748 013 B1**
(45) Date de publication et mention de la délivrance du brevet: **25.10.2000**
(21) Numéro de dépôt: 96410061.4
(22) Date de dépôt: 30.05.1996
(51) Int. Cl.: H02B 1/20

(54) **Dispositif d'assemblage et de liaison électrique d'appareils modulaires tels des disjoncteurs ou analogues**
Vorrichtung zur elektrischen Verbindung von modularen Geräten wie Schaltern oder dergleichen
Device for electrical connection of modular apparatus such as switches or the like

(30) Priorité: 07.06.1995 FR 9507014
(43) Date de publication de la demande: 11.12.1996
(73) Titulaire: Schneider Electric Industries SA, 92500 Rueil-Malmaison (FR)
(72) Inventeur: Bartolo, William, 38050 Grenoble Cedex 09 (FR); Lecorre, Noel, 38050 Grenoble Cedex 09 (FR); Reynaud, François, 38050 Grenoble Cedex 09 (FR)
(74) Mandataire: Ritzenthaler, Jacques

(56) Documents cités:
- EP-A- 0 229 590
- EP-A- 0 237 388
- EP-A- 0 466 043
- EP-A- 0 467 171
- EP-A- 0 472 409
- DE-A- 3 023 499
- FR-A- 2 438 359

## Description

La présente invention est relative à un dispositif d'assemblage et de liaison électrique d'une pluralité d'appareils de puissance tels des disjoncteurs cohabitant sur un même rail de montage avec des blocs auxiliaires ou analogues, lesdits appareils et blocs comportant des boîtiers modulaires accolés par leurs faces latérales de manière à former une rangée horizontale, l'ensemble des appareils électriques de puissance étant reliés électriquement et/ou alimentés en amont, par un peigne de raccordement commun, en forme de bus comportant une ou plusieurs barres conductrices, s'étendant sensiblement parallèlement à la direction longitudinale du rail, et sensiblement perpendiculairement à l'une des faces des boîtiers se trouvant en regard dudit peigne , lesdites barres étant reliées chacune à l'une des phases ou bien au neutre, et en ce que chacune des plages de contact des appareils de puissance est reliée électriquement et sélectivement en amont à l'une des barres conductrices par un connecteur, chaque connecteur comportant une première extrémité reliée électriquement à la plage précitée à travers une ouverture ménagée dans la face correspondante du boîtier et une seconde extrémité apte à s'engager avec la barre sélectionnée et à se déplacer le long de cette barre de manière à établir la connexion électrique, en une position longitudinale quelconque de la barre. (voir DE-A-30 23 499).

L'imbrication dans une même rangée d'appareils de pas différents ou de nature différente, par exemple des appareils de puissance tels des disjoncteurs et des modules auxiliaires, notamment un déclencheur différentiel, un module de signalisation de défaut ou de la position des contacts etc., imposait jusqu'à présent, lorsque les appareils de puissance étaient alimentés par un peigne standard, la suppression des dents non utilisées. Cette suppression s'effectue généralement au niveau de chaque module auxiliaire, par sciage préalable desdites dents. Il en résulte que si le monteur veut par la suite modifier la répartition modulaire des appareils, le peigne prédécoupé risque de ne plus convenir au nouveau montage, et doit être jeté. La préparation du peigne pour chaque rangée spécifique augmente d'autre part le temps de raccordement.

La présente invention résout ces problèmes et propose un dispositif d'assemblage et de liaison d'appareils électriques, de conception simple, permettant de mixer sur un même rail des appareils de pas différents et de nature différente, les appareils de puissance étant raccordés à un peigne commun de manière rapide et économique.

L'invention est caractérisée en ce que la plage de contact de chaque appareil de puissance comporte une partie d'extrémité logée dans une rainure prévue dans la face précitée du boîtier et ouverte en direction du peigne, ladite partie d'extrémité ainsi que la rainure s'étendant perpendiculairement aux barres sur environ toute la hauteur du peigne de manière à permettre le raccordement du connecteur à ladite plage en plusieurs positions le long de ladite partie d'extrémité, correspondant aux différentes positions des barres.

Selon une réalisation particulière de l'invention, le peigne se trouve en regard des faces supérieures arrière des appareils modulaires.

Selon une première réalisation, la partie d'extrémité précitée de la plage de contact est formée par une pince logée au fond de la rainure, ladite pince étant destinée à coopérer avec une partie d'extrémité en forme de couteau du connecteur.

Selon une variante de réalisation, la partie d'extrémité précitée de la plage de contact est formée par un couteau s'étendant perpendiculairement aux barres, ledit couteau étant destiné à coopérer avec une extrémité en forme de pince du connecteur.

Selon une autre caractéristique, le peigne (ou bus) précité comprend un profilé isolant formé par un support s'étendant parallèlement à la surface du rail et des entretoises s'étendant perpendiculairement audit support, une barre étant logée dans chaque espace séparant deux entretoises consécutives.

Selon une caractéristique particulière, la seconde extrémité des connecteurs est formée par un couteau et en ce que chacune des barres est solidaire d'une lame élastique recourbée sous ladite barre, le couteau étant engagé et maintenu entre la barre et la lame élastique en position de contact.

Selon une variante de réalisation, la deuxième extrémité des connecteurs est formée par une pince destinée à s'engager avec l'une des barres fixées sur le support précité entre deux entretoises.

Avantageusement, chaque connecteur est formé de deux couteaux perpendiculaires ou bien de deux pinces mises bout à bout dont les efforts de pincement sont perpendiculaires.

Avantageusement, la première extrémité des connecteurs est munie d'éléments de guidage transversaux coopérant avec une rainure correspondante prévue dans le boîtier afin d'améliorer le positionnement du connecteur dans le boîtier.

Selon une autre caractéristique, les appareils électriques de puissance unipolaires ou multipolaires sont formés au choix par des disjoncteurs, des contacteurs, des interrupteurs et des télérupteurs, et les blocs auxiliaires comportent au moins un module de signalisation de défaut SD et/ou de la position des contacts CAOF, un module déclencheur à manque de tension MN ou à émission MX, et un module déclencheur différentiel.

Selon une autre réalisation de l'invention, les connecteurs sont venus de matière avec les parties d'extrémité des plages de contact correspondantes.

Selon encore une autre réalisation, les connecteurs sont solidarisés par exemple par soudure aux parties d'extrémité des plages de contact correspondantes

Mais d'autres avantages et caractéristiques de l'invention apparaîtront mieux dans la description détaillée qui suit et se réfère aux dessins annexés donnés uniquement à titre d'exemple et dans lesquels :
- La figure 1 est une vue schématique en perspective d'une rangée d'appareils électriques modulaires montés sur un rail, comprenant des blocs auxiliaires et des appareils de puissance reliés électriquement conformément à l'invention.
- La figure 2 est une vue partielle et en coupe, illustrant plus particulièrement la partie supérieure et arrière d'un appareil unipolaire.
- La figure 3 est une vue partielle, de dessus de la figure précédente, illustrant deux appareils unipolaires accolés.
- La figure 4 est une vue schématique arrière d'un disjoncteur tripolaire et neutre, sans les éléments de raccordement au peigne.
- La figure 5 illustre dans une vue de côté, des éléments de connexion (ou connecteurs) en forme de couteau conformes à une réalisation particulière de l'invention, dans quatre positions différentes.
- La figure 6 est une vue de dessus de l'un des couteaux.
- La figure 7 est une vue similaire à la figure 4, quatre connecteurs à couteaux ayant été montés sur le disjoncteur tripolaire et neutre.
- La figure 8 est une vue partielle, en perspective, d'un bus (ou peigne) d'alimentation conforme à une réalisation particulière de l'invention.
- La figure 9 est une vue en coupe transversale du bus de la figure 8.
- La figure 10 illustre schématiquement les trois composants du bus de la figure 9.
- La figure 11 illustre, dans une vue schématique, le montage d'un appareil électrique sur un rail et son raccordement électrique à un bus d'alimentation conformément à l'invention.
- La figure 12 est une vue partielle de dessus, illustrant la mise en place de deux connecteurs à couteaux sur un appareil phase plus neutre.
- La figure 13 est une vue arrière d'appareils "phase + neutre" et "phase + neutre différentiels" équipés de leurs connecteurs à couteaux.
- Les figures 14, 15 et 16 illustrent respectivement, la partie amont d'un appareil unipolaire en vue de dessus, un connecteur sous forme de double-pinces et un bus d'alimentation, conformément à une autre réalisation de l'invention.

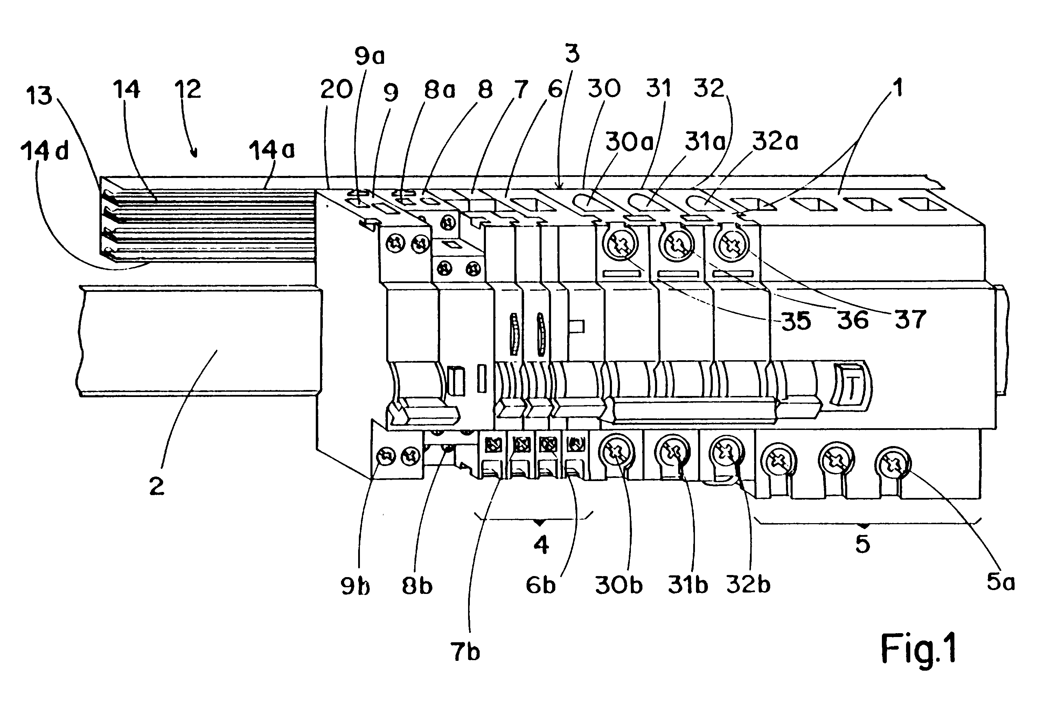

Sur la figure 1, on voit une pluralité d'appareils électriques 1 à boîtiers modulaires, fixés sur un rail de montage 2 et accolés par leurs faces latérales en formant une rangée horizontale.

Cette rangée comporte un bloc disjoncteur triphasé 3 formé par trois disjoncteurs unipolaires 30, 31, 32 du type décrit dans le brevet français 2.616.583. Au bloc disjoncteur 3 sont accouplés plusieurs blocs auxiliaires 4,5, notamment de déclenchement, de commande et de signalisation. Sur le côté droit du bloc disjoncteur 3, est agencé un bloc auxiliaire de déclenchement différentiel 5. Sur le côté gauche du bloc disjoncteur 3 sont échelonnés, un module auxiliaire de déclenchement 6 à manque de tension MN ou à émission MX, un module auxiliaire de signalisation 7 de défaut SD et/ou de la position des contacts CAOF, un appareil de contrôle commande 8 et un interrupteur unipolaire et neutre 9.

On notera que cette rangée pourrait encore comporter des disjoncteurs supplémentaires et d'autres appareils de puissance, tels des contacteurs, des interrupteurs, des télérupteurs, etc. Chacun des pôles de ces appareils de puissance 30, 31, 32, 8 et 9 comporte une borne d'alimentation 30a, 31a, 32a, 8a, 9a et une borne de ligne ou de départ 30b, 31b, 32b, 8b, 9b situées respectivement sur les faces latérales étroites opposées du boîtier modulaire. Le bloc auxiliaire de déclenchement différentiel 5 est équipé sur sa face inférieure de bornes de raccordement 5a, alors que l'autre face supérieure est dépourvue de bornes. La connexion électrique entre les deux blocs 3, 5 s'effectue au moyen d'un faisceau de conducteurs de liaison (non représentés) reliés aux bornes de raccordement correspondantes

Chacun des modules auxiliaires 6, 7 est doté de bornes de connexion 6b, 7b situées le long de sa face inférieure, alors que du côté de leur face supérieure, ces modules auxiliaires ne possèdent pas de bornes.

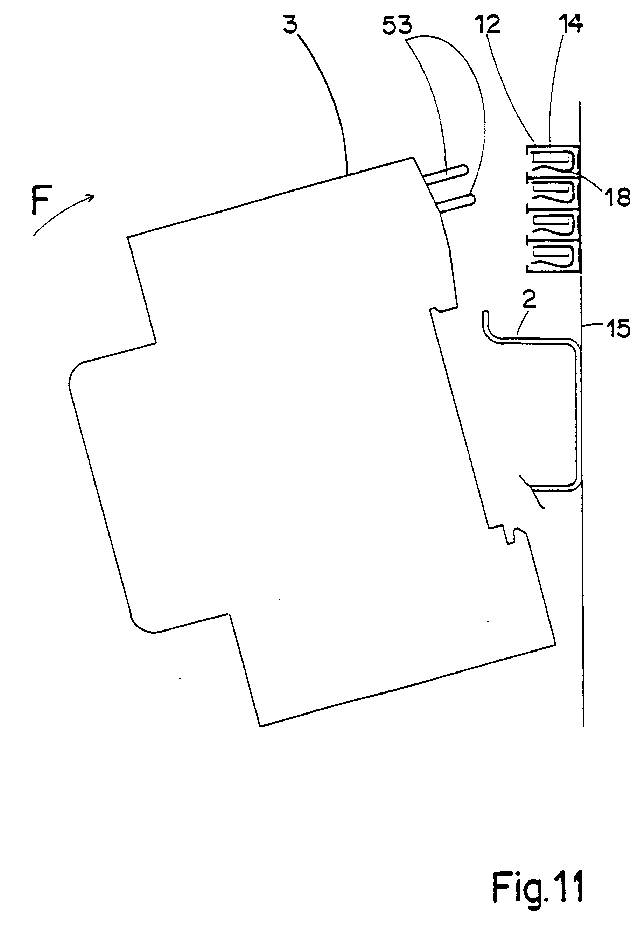

Conformément à l'invention, les bornes d'alimentation 30a, 31a, 32a, 8a, 9a de l'ensemble des disjoncteurs 3 et autres appareils de puissance 8, 9, à l'exclusion des modules auxiliaires d'une même rangée, sont interconnectées par un bus (ou peigne) d'alimentation commun 12 constitué principalement par un support vertical isolant 13 à partir duquel s'étendent cinq barres horizontales conductrices 14, parallèles entre elles et à la direction longitudinale du rail 2. Ce bus 12 est fixé sur une surface d'appui 15 (visible sur la figure 11), commune ou décalée en profondeur avec celle supportant le rail 2, à une hauteur telle que la première barre 14a s'étende légèrement au-dessous de la face supérieure 20 des appareils, et que la dernière barre 14d s'étende au-dessus du bord supérieur du rail 2.

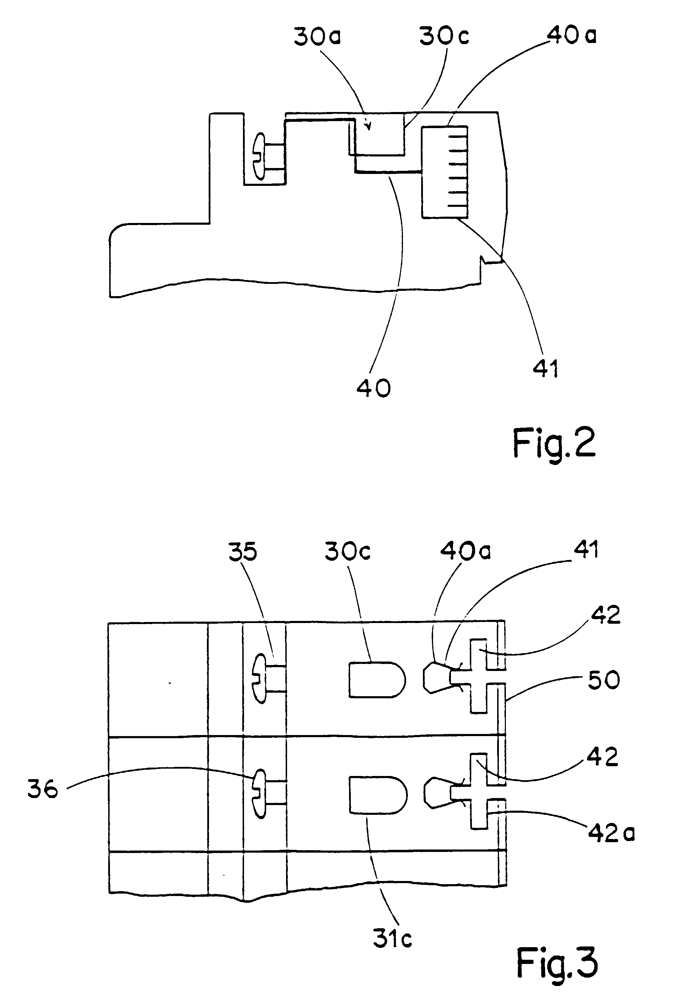

Comme ceci est également visible sur les figures 2 et 3 et de manière connue en soi, les bornes d'alimentation 30a, 31a, 32a, 8a, 9a des appareils de puissance 3,8,9 sont situées dans des cages 30c, 31c et peuvent être reliées à des câbles électriques, un peigne de raccordement classique (non représenté) dont les dents pénètrent dans les cages, ou bien un peigne de raccordement unipolaire à fourche (non représenté) dont les dents passent sous les têtes de vis 35, 36, 37 ; le serrage s'opérant au moyen des vis 35, 36, 37 accessibles par des ouvertures.

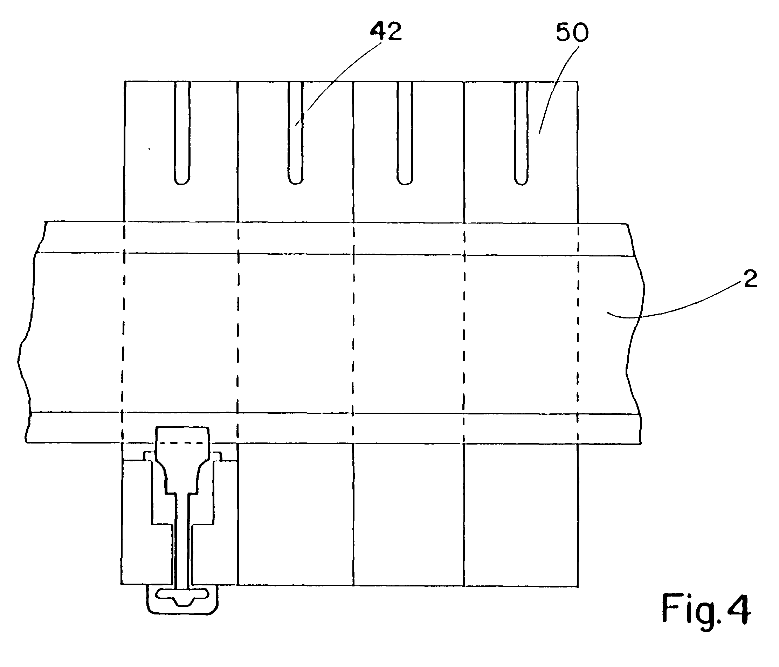

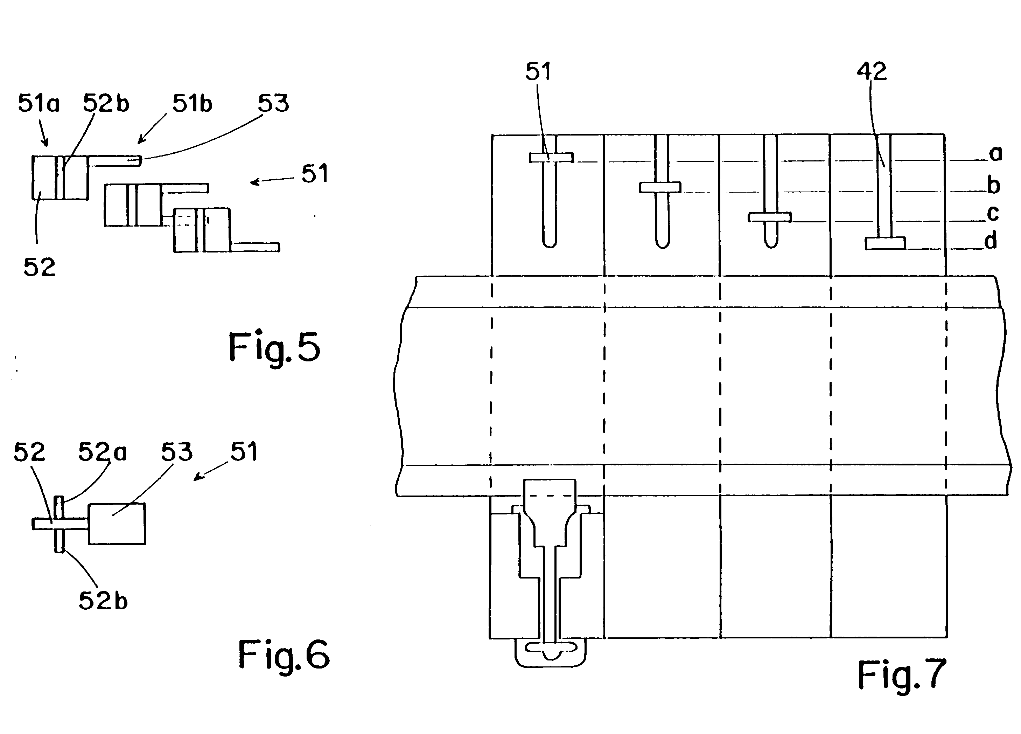

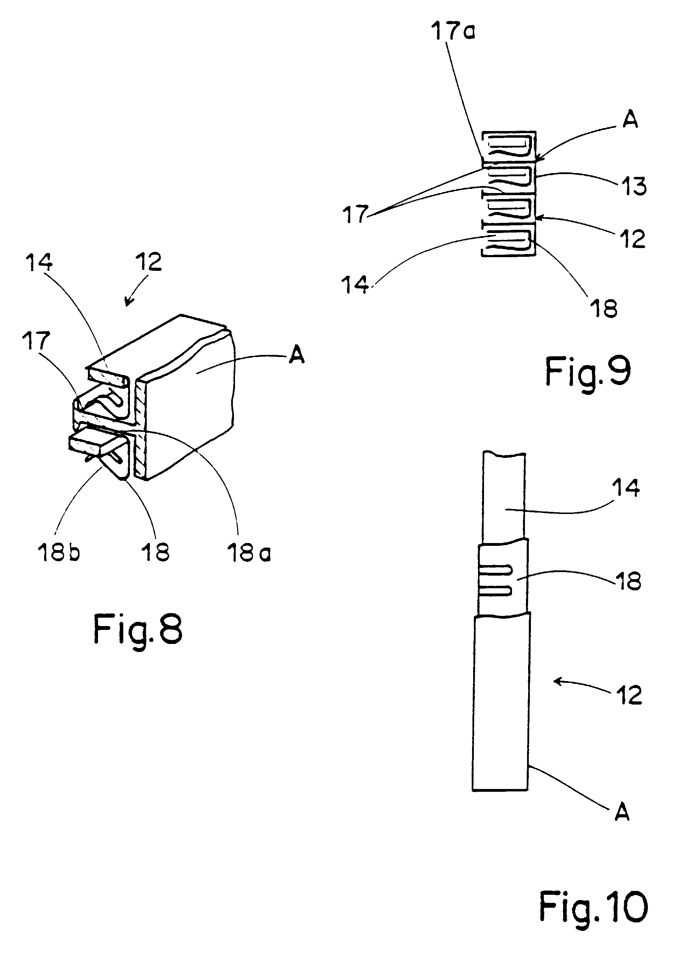

Selon une réalisation particulière de l'invention, les plages de contact 40 des bornes d'alimentation 30a, 31a... se prolongent chacune vers l'arrière des appareils en formant à leur extrémité 40a une pince 41 logée dans une rainure 42 (figure 3,4) prévue dans la partie arrière supérieure des boîtiers et s'étendant environ sur toute la hauteur du bus d'alimentation précité 12, situé en regard de la face arrière 50 des boîtiers. Cette rainure 42, comme visible sur la figure 3, présente une section transversale en forme de croix et est destinée à recevoir un connecteur 51 en forme de double-couteaux tel que représenté sur les figures 5 et 6. Ce connecteur 51 est constitué par une pièce formant à ses deux extrémités 51a, 51b deux couteaux perpendiculaires 52, 53 dont l'un, dit premier 52, est destiné à coopérer avec la pince précitée 41 tandis que l'autre 53, dit second, est destiné à établir le contact avec l'une des barres 14 du bus d'alimentation 12. On voit également sur ces figures que le premier couteau 52 est pourvu de deux éléments de guidage 52a, 52b s'étendant de part et d'autre dudit couteau 52 et destinés à s'engager dans une rainure correspondante 42a du boîtier (figure 3). Le second couteau 53 est destiné plus particulièrement à coopérer avec l'une des barres 14 d'un bus 12 tel que représenté sur les figures 8 à10.

Selon cette réalisation particulière, ce bus (ou peigne) 12 comprend un profilé isolant A constitué par un support de barres vertical 13 s'étendant parallèlement au rail de montage 2 et par des entretoises horizontales 17 s'étendant perpendiculairement audit support 13, sur toute sa longueur. Chaque espace séparant deux entretoises consécutives 17 forme un logement pour l'une des barres conductrices 14 du bus 12, chacune des barres 14 étant solidaire d'une lame élastique isolante 18. Cette lame élastique 18 s'étendant sur toute la longueur de la barre 14, présente une section transversale sensiblement en forme de U dont l'une des ailes 18a est solidarisée à la barre 14 tandis que l'autre aile 18b est recourbée sous ladite barre 14 et en direction de la barre 14. On notera que l'extrémité des entretoises 17 est pourvue d'éléments d'arrêt 17a participant au maintien des barres dans le profilé.

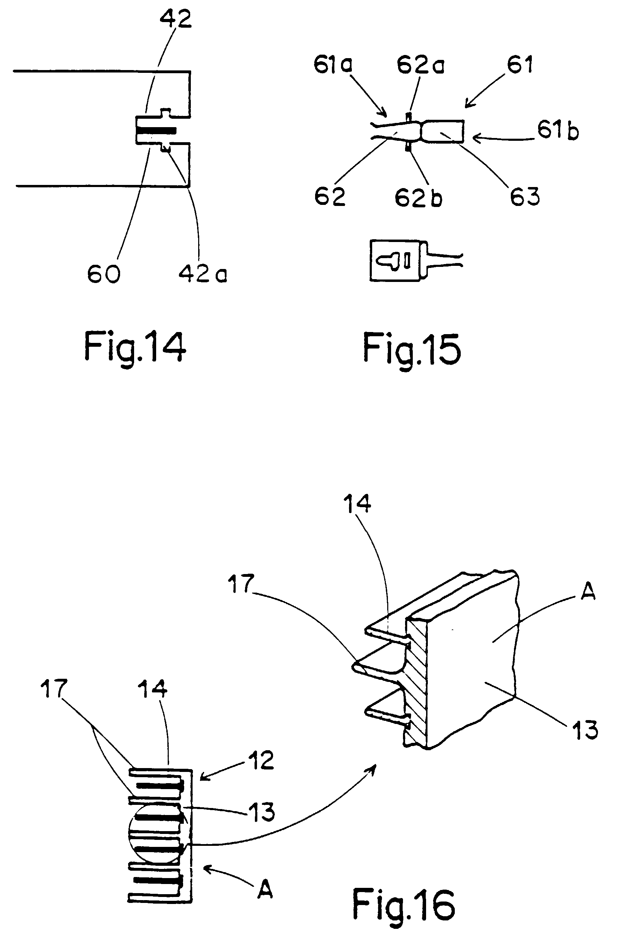

En se reportant aux figures 14, 15 et 16 on voit que conformément à une autre réalisation de l'invention, la rainure 42 prévue dans la partie arrière de chaque appareil électrique, présente une largeur plus importante que celle de la réalisation précédente. Au fond de cette rainure 42 est fixé un couteau 60 s'étendant sur toute la hauteur de ladite rainure 42 et formant l'extrémité de la plage de contact de la borne d'alimentation correspondante. Le connecteur 61 dans ce cas, est constitué par une pièce formant à chacune de ses deux extrémités 61a, 61b une pince, les deux pinces 62, 63 étant perpendiculaires, c'est à dire dont les forces de pincement sont perpendiculaires. L'une des pinces 62 comporte, comme dans la réalisation précédente, des éléments de guidage 62a, 62b de ladite pince 62 dans la rainure 42, tandis que l'autre pince 63 est destinée à coopérer avec l'une des barres conductrices 14 du bus d'alimentation 12, lesdites barres 14 étant, dans cette réalisation particulière, fixées directement par l'une des leurs extrémités sur le support vertical 13 d'un profilé isolant A tel qu'illustré sur la figure 16, entre deux entretoises 17 consécutives.

On décrira ci-après le raccordement électrique d'un ensemble d'appareils modulaires à un bus d'alimentation 12 conformément à la première réalisation puis à la seconde réalisation, en référence aux figures.

Dans un premier temps, on procédera à la mise en place des connecteurs 51 ou 61 dans la partie arrière des appareils de puissance 3, 8, 9 devant être raccordés au bus 12. Lorsque ces connecteurs 51, 61 seront du type à deux couteaux 52, 53, ceux-ci seront introduits par leurs couteaux 52 comportant les éléments de guidage 52a, 52b, dans les rainures 42 prévues dans les boîtiers et plus précisément dans les pinces 41 situées dans ces rainures 42, par le haut des appareils.

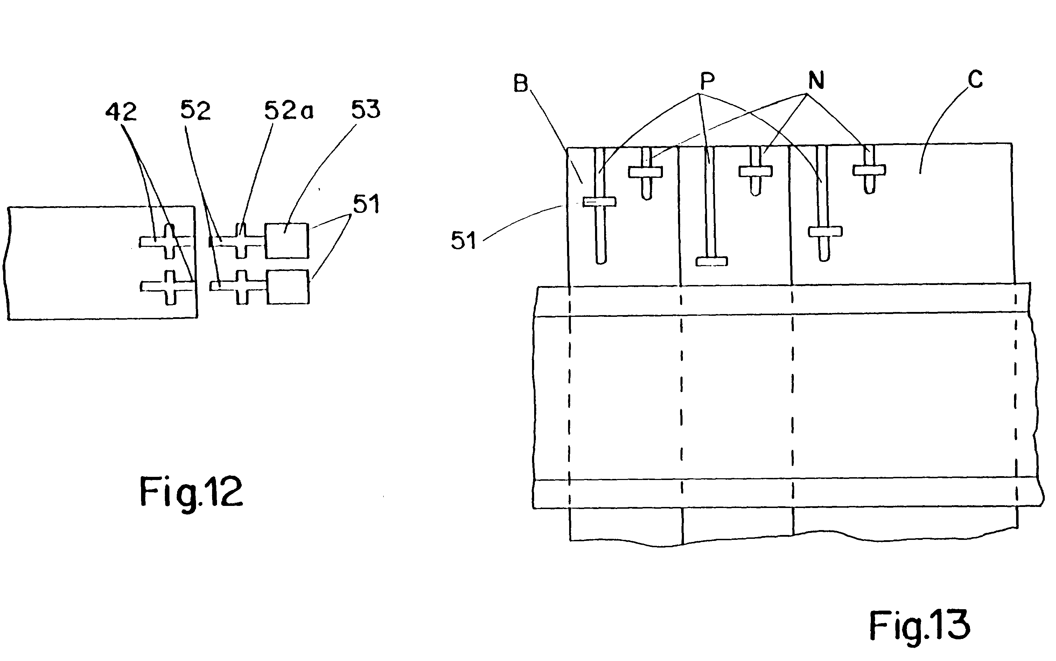

Puis, ces connecteurs 51 seront amenés par coulissement à l'intérieur des rainures 42 à la hauteur souhaitée, de manière à s'aligner sur l'une des barres 14 du bus d'alimentation 12, reliée à la phase d'alimentation souhaitée. On voit ainsi sur la figure 7, que quatre connecteurs à couteaux 51 sont montés respectivement dans les quatre boîtiers d'un appareil de puissance du type tripolaire et neutre, en quatre positions différentes a, b, c, d, de manière à être reliés respectivement au neutre, à une première, une seconde et une troisième phase d'alimentation. La figure 12 illustre un autre exemple, dans lequel le même principe est appliqué à un appareil phase plus neutre, deux couteaux 51 étant introduits dans le même boîtier. La figure 13 illustre l'application de ce principe à des appareils du type phase plus neutre B et phase plus neutre différentiel C. On voit que dans ce cas les connecteurs 51 situés du côté de la phase P seront avantageusement positionnés sur des phases différentes, en vue de l'obtention d'un équilibrage des consommations, tandis que les connecteurs 51 situés du côté du neutre N seront situés tous au même niveau.

Une fois ces connecteurs 51 mis en place, les appareils 3, 8, 9 seront engagés sur la partie inférieure du rail de montage 2, puis seront amenés à pivoter suivant la flèche F, tel qu'illustré sur la figure 11. Pendant ce mouvement de pivotement, les second couteaux 53 des connecteurs seront amenés en contact avec les barres correspondantes 14 du bus d'alimentation 12, et maintenus en contact avec ces barres 14 grâce à l'action des lames élastiques 18 associées aux dites barres 14. On notera que, bien que dans un but de simplicité, seuls deux connecteurs à couteaux 53 et une barre conductrice 14 ont été représentés sur la figure 11, ce principe de montage pourra être utilisé pour un nombre quelconque de connecteurs à couteaux et de barres correspondantes.

Lorsque les connecteurs 61 seront du type à deux pinces 62, 63, ceux-ci seront introduits de la même manière par le haut des appareils, de façon que les pinces verticales 62 s'engagent sur les couteaux correspondants 60 fixés dans les rainures 42 des boîtiers. Puis, ces connecteurs 61 seront amenés à la position adéquate de façon que les pinces horizontales 63 puissent s'engager sur les barres correspondantes 14 du bus 12 tel qu'illustré sur la figure 16.

On voit donc que les connecteurs peuvent coulisser horizontalement sur le bus afin de positionner un appareil donné en un endroit quelconque sur le rail DIN.

On a donc réalisé grâce à l'invention un dispositif d'assemblage et de liaison d'appareils électriques alimentés en amont par un bus, qui permette le montage sur un même rail de produits de pas différents et de nature différente (appareils de puissances, contrôle commande, auxiliaires) sans qu'il soit nécessaire de recouper des dents de peigne ou bien d'utiliser des accessoires support de fixation, comme ceci était le cas précédemment.

Il est ainsi possible de monter par exemple sur un même rail des appareils du type multipolaire cohabitant avec des auxiliaires, des appareils du type unipolaire plus neutre et unipolaire plus neutre différentiel.

L'invention permet également de conserver les deux autres possibilités de raccordement classiquement utilisés sur les appareils de puissance, à savoir le raccordement par câbles ou par peigne classique (à dents), à travers la cage du boîtier de chaque appareil.

## Revendications

1. Dispositif d'assemblage et de liaison électrique d'une pluralité d'appareils de puissance (3, 8, 9) tels des disjoncteurs cohabitant sur un même rail de montage (2) avec des blocs auxiliaires (4 - 7) ou analogues, lesdits appareils et blocs comportant des boîtiers modulaires accolés par leurs faces latérales de manière à former une rangée horizontale, l'ensemble des appareils électriques de puissance étant reliés électriquement et/ou alimentés en amont par un peigne de raccordement commun (12), en forme de bus et comportant une ou plusieurs barres conductrices (14), s'étendant sensiblement parallèlement à la direction longitudinale du rail (2) et sensiblement perpendiculairement à l'une des faces des boîtiers se trouvant en regard dudit peigne (12), chacune des plages de contact (40) des appareils de puissance (3, 8, 9) étant reliée électriquement et sélectivement en amont à l'une des barres conductrices (14) par un connecteur (51, 61), chaque connecteur comportant une première extrémité (51a, 61a) reliée électriquement à la plage précitée (40) et une seconde extrémité (51b, 61b) apte à s'engager avec la barre sélectionnée (14) caractérisé en ce que la plage de contact (40) de chaque appareil de puissance (3, 8, 9) comporte une partie d'extrémité (40a) logée dans une rainure (42) prévue dans la face précitée du boîtier et ouverte en direction du peigne (12), ladite partie d'extrémité (40a) ainsi que la rainure (42) s'étendant perpendiculairement aux barres (14) sur environ toute la hauteur du peigne (12) de manière à permettre le raccordement du connecteur à ladite plage (40) en plusieurs positions le long de ladite partie d'extrémité (40a), correspondant aux différentes positions des barres (14).

2. Dispositif selon la revendication 1, caractérisé en ce que le peigne (12) se trouve en regard des faces supérieures arrière (50) des appareils modulaires (3, 8, 9).

3. Dispositif selon la revendication 1 ou 2, caractérisé en ce que la partie d'extrémité précitée (40a) de la plage de contact (40) est formée par une pince (41) logée au fond de la rainure (42), ladite pince (41) étant destinée à coopérer avec une partie d'extrémité en forme de couteau (52) du connecteur (51).

4. Dispositif selon la revendication 1 ou 2, caractérisé en ce que la partie d'extrémité précitée (40a) de la plage de contact (40) est formée par un couteau (60) s'étendant perpendiculairement aux barres (14), ledit couteau (60) étant destiné à coopérer avec une extrémité en forme de pince (62) du connecteur (61).

5. Dispositif selon l'une quelconque des revendications précédentes, caractérisé en ce que le peigne (ou bus) précité (12) comprend un profilé isolant (A) formé par un support (13) s'étendant parallèlement à la surface du rail (2) et des entretoises (17) s'étendant perpendiculairement audit support (13), une barre (14) étant logée dans chaque espace séparant deux entretoises consécutives (17).

6. Dispositif selon la revendication 5, caractérisé en ce que la seconde extrémité (51b) des connecteurs (51) est formée par un couteau (53) et en ce que chacune des barres (14) est solidaire d'une lame élastique (18) recourbée sous ladite barre (14), le couteau (53) étant engagé et maintenu entre la barre (14) et la lame élastique (18) en position de contact.

7. Dispositif selon la revendication 5, caractérisé en ce que la deuxième extrémité (61b) des connecteurs (61) est formée par une pince (63) destinée à s'engager avec l'une des barres (14) fixées sur le support précité (13) entre deux entretoises (17).

8. Dispositif selon les revendications 3 et 6, caractérisé en ce que chaque connecteur (51) est formé de deux couteaux perpendiculaires (52, 53).

9. Dispositif selon les revendications 4 et 7, caractérisé en ce que chaque connecteur (61) est formé de deux pinces (62, 63) mises bout à bout dont les efforts de pincement sont perpendiculaires.

10. Dispositif selon l'une quelconque des revendications 1 à 9, caractérisé en ce que la première extrémité des connecteurs (51, 61) est munie d'éléments de guidage transversaux (52a, 52b, 62a, 62b) coopérant avec une rainure (42a) correspondante prévue dans le boîtier afin d'améliorer le positionnement du connecteur (51, 61) dans le boîtier.

11. Dispositif selon l'une quelconque des revendications précédentes, caractérisé en ce que les appareils électriques de puissance (3, 8, 9) unipolaires ou multipolaires sont formés au choix par des disjoncteurs, des contacteurs, des interrupteurs et des télérupteurs, et que les blocs auxiliaires (4, 5) comportent au moins un module de signalisation (7) de défaut SD et/ou de la position des contacts CAOF, un module déclencheur (6) à manque de tension MN ou à émission MX, et un module déclencheur différentiel (5).

12. Dispositif selon l'une quelconque des revendications précédentes, caractérisé en ce que les connecteurs sont venus de matière avec les parties d'extrémité (40a) des plages de contact correspondantes.

13. Dispositif selon l'une quelconque des revendications 1 à 12, caractérisé en ce que les connecteurs (51,61) sont solidarisés par exemple par soudure aux parties d'extrémité (40a) des plages correspondantes.

## Patentansprüche

1. Vorrichtung zur Aneinanderreihung und elektrischen Verbindung mehrerer Leistungs-Schaltgeräte (3, 8, 9) wie z.B. Leistungsschalter, die zusammen mit Hilfsblöcken (4-7) o.ä. auf einer gemeinsamen Tragschiene (2) montiert sind, welche genannten Schaltgeräte und Blöcke zur Bildung einer horizontalen Reihe mit ihren Seitenflächen aneinandergefügte, modulare Gehäuse aufweisen, wobei alle elektrischen Leistungs-Schaltgeräte auf der Eingangsseite über eine als Bus ausgebildete gemeinsame Kammschiene (12) eingespeist und/oder elektrisch miteinander verbunden werden, die mehrere, annähernd parallel zur Längsrichtung der Tragschiene (2) sowie annähernd senkrecht zu einer, der genannten Kammschiene (12) gegenüberliegenden Gehäuseseite angeordnete Stromschienen (14) umfaßt, jede Anschlußfahne (40) der Leistungs-Schaltgeräte (3, 8, 9) einspeiseseitig über einen Steckverbinder (51, 61) mit jeweils einer der Stromschienen (14) elektrisch verbunden ist, jeder Steckverbinder ein erstes Ende (51a, 61a), das mit der genannten Anschlußfahne (40) elektrisch verbunden ist, sowie ein zweites Ende (51b, 61b) umfaßt, welches so ausgebildet ist, daß es an die zugeordnete Stromschiene (14) geführt werden kann, dadurch gekennzeichnet, daß die Anschlußfahne (40) jedes Leistungs-Schaltgeräts (3, 8, 9) einen Endabschnitt (40a) aufweist, der in eine an der genannten Gehäuseseite ausgebildete und in Richtung der Kammschiene (12) offene Nut (42) eingesetzt ist, wobei der genannte Endabschnitt (40a) sowie die Nut (42) über praktisch die gesamte Höhe der Kammschiene (12) senkrecht zu den Stromschienen (14) verlaufen, so daß sie den Anschluß des Steckverbinders an die genannte Anschlußfahne (40) in mehreren, den verschiedenen Positionen der Stromschienen (14) entsprechenden Positionen, entlang des genannten Endabschnitts (40a) erlaubt.

2. Vorrichtung nach Anspruch 1, dadurch gekennzeichnet, daß die Kammschiene (12) gegenüber den hinteren oberen Seitenflächen (50) der modularen Schaltgeräte (3, 8, 9) angeordnet ist.

3. Vorrichtung nach Anspruch 1 oder 2, dadurch gekennzeichnet, daß der genannte Endabschnitt (40a) der Anschlußfahne (40) als am Grund der Nut (42) gelagerte Kontaktzange (41) ausgebildet ist, welche Kontaktzange (41) dazu dient, mit einem als Kontaktmesser (52) ausgebildeten Endabschnitt des Steckverbinders (51) zusammenzuwirken.

4. Vorrichtung nach Anspruch 1 oder 2, dadurch gekennzeichnet, daß der genannte Endabschnitt (40a) der Anschlußfahne (40) als senkrecht zu den Stromschienen (14) angeordnetes Kontaktmesser (60) ausgebildet ist, welches Kontaktmesser (60) dazu dient, mit einem als Kontaktzange (62) ausgebildeten Endabschnitt des Steckverbinders (61) zusammenzuwirken.

5. Vorrichtung nach irgendeinem der vorhergehenden Ansprüche, dadurch gekennzeichnet, daß die genannte Kammschiene (bzw. der Bus) (12) ein Isolierstoffprofil (A) umfaßt, das aus einem parallel zur Oberfläche der Tragschiene (2) angeordneten Träger (13) sowie senkrecht zu diesem Träger (13) angeordneten Querstegen (17) besteht, wobei in jedem, zwei benachbarte Querstege (17) trennenden Zwischenraum eine Stromschiene (14) gelagert ist.

6. Vorrichtung nach Anspruch 5, dadurch gekennzeichnet, daß das zweite Ende (51b) der Steckverbinder (51) als Kontaktmesser (53) ausgebildet und jede der Stromschienen (14) mit einer biegsamen Klammer (18) verbunden ist, die unter die genannte Stromschiene (14) gebogen ist, wobei das Messer (53) in der Kontaktstellung zwischen die Stromschiene (14) und die biegsame Klammer (18) eingeführt ist und in dieser Lage gehalten wird.

7. Vorrichtung nach Anspruch 5, dadurch gekennzeichnet, daß das zweite Ende (61b) der Steckverbinder (61) als Kontaktzange (63) ausgebildet ist, die dazu dient, auf eine der zwischen zwei Querstegen (17) auf dem genannten Träger (13) befestigten Stromschienen (14) aufgesteckt zu werden.

8. Vorrichtung nach den Ansprüchen 3 und 6, dadurch gekennzeichnet, daß jeder Steckverbinder (51) aus zwei senkrecht zueinander angeordneten Kontaktmessern (52, 53) besteht.

9. Vorrichtung nach den Ansprüchen 4 und 7, dadurch gekennzeichnet, daß jeder Steckverbinder (61) aus zwei mit ihren Enden aneinanderstoßenden Kontaktzangen (62, 63) besteht, deren Spannkräfte senkrecht zueinander wirken.

10. Vorrichtung nach irgendeinem der Ansprüche 1 bis 9, dadurch gekennzeichnet, daß am ersten Ende der Steckverbinder (51, 61) Querführungselemente (52a, 52b, 62a, 62b) ausgebildet sind, die mit einer zugeordneten, im Gehäuse ausgebildeten Nut (42a) zusammenwirken, um eine bessere Positionerung des Steckverbinders (51, 61) im Gehäuse zu erzielen.

11. Vorrichtung nach irgendeinem der vorhergehenden Ansprüche, dadurch gekennzeichnet, daß die einpoligen oder mehrpoligen Leistungs-Schaltgeräte (3, 8, 9) wahlweise Leistungsschalter, Schütze, Lastschalter oder Stromstoßrelais sind und die Hilfsblöcke (4, 5) mindestens ein Fehlermeldemodul SD und/oder Schaltstellungs-Anzeigemodul CAOF (7), einen Unterspannungsauslöser MN bzw. Arbeitsstromauslöser MX (6) sowie einen FI-Auslöser (5) umfassen.

12. Vorrichtung nach irgendeinem der vorhergehenden Ansprüche, dadurch gekennzeichnet, daß die Steckverbinder einstückig mit den Endabschnitten (40a) der zugehörigen Anschlußfahnen ausgebildet sind.

13. Vorrichtung nach irgendeinem der Ansprüche 1 bis 12, dadurch gekennzeichnet, daß die Steckverbinder (51, 61) beispielsweise durch Verlöten fest mit den Endabschnitten (40a) der zugehörigen Anschlußfahnen verbunden sind.

## Claims

1. A device for assembly and electrical connection of a plurality of power apparatuses (3, 8, 9) such as circuit breakers installed together on the same mounting rail (2) with auxiliary units (4-7) or the like, said apparatuses and units comprising modular cases adjoined by their side faces so as to form a horizontal row, the set of electrical power apparatuses being electrically connected and/or supplied with power up-line by a common connecting comb (12) in the form of a bus and comprising one or more conducting bars (14), extending appreciably parallel to the longitudinal direction of the rail (2), and appreciably perpendicularly to one of the faces of the cases located facing said comb (12), each of the contact strips (40) of the power apparatuses (3, 8, 9) being electrically and selectively connected up-line to one of the conducting bars (14) by a connector (51, 61), each connector comprising a first end (51 a, 61a) electrically connected to the above-mentioned strip (40), and a second end (51b, 61b) designed to engage with the selected bar (14), characterized in that the contact strip (40) of each power apparatus (3, 8, 9) comprises an end part (40a) housed in a groove (42) provided in the above-mentioned face of the case and open in the direction of the comb (12), said end part (40a) and the groove (42) extending perpendicularly to the bars (14) over roughly the whole height of the comb (12) so as to enable the connector to be connected to said strip (40) in several positions along said end part (40a), corresponding to the different positions of the bars (14).

2. The device according to claim 1, characterized in that the comb (12) is located facing the rear upper faces (50) of the modular apparatuses (3, 8, 9).

3. The device according to claim 1 or 2, characterized in that the above-mentioned end part (40a) of the contact strip (40) is formed by a grip (41) housed in the bottom of the groove (42), said grip (41) being designed to cooperate with an end part in the form of a knife-blade (52) of the connector (51).

4. The device according to claim 1 or 2, characterized in that the above-mentioned end part (40a) of the contact strip (40) is formed by a knife-blade (60) extending perpendicularly to the bars (14), said knife-blade (60) being designed to cooperate with an end of the connector (61) in the form of a grip (62).

5. The device according to any one of the above claims, characterized in that the above-mentioned comb (or bus) (12) comprises an insulating profiled section (A) formed by a support (13) extending parallel to the surface of the rail (2) and spacers (17) extending perpendicularly to said support (13), a bar (14) being housed in each space separating two consecutive spacers (17).

6. The device according to claim 5, characterized in that the second end (51b) of the connectors (51) is formed by a knife-blade (53) and in that each of the bars (14) is securedly united to a flexible blade (18) curved under said bar (14), the knife-blade (53) being engaged and held between the bar (14) and the flexible blade (18) in the contact position.

7. The device according to claim 5, characterized in that the second end (61 b) of the connectors (61) is formed by a grip (63) designed to engage with one of the bars (14) fixed on the above-mentioned support (13) between two spacers (17).

8. The device according to claims 3 and 6, characterized in that each connector (51) is formed by two perpendicular knife-blades (52, 53).

9. The device according to claims 4 and 7, characterized in that each connector (61) is formed by two grips (62, 63) placed end to end whose gripping forces are perpendicular.

10. The device according to any one of the claims 1 to 9, characterized in that the first end of the connectors (51, 61) is provided with transverse guiding elements (52a, 52b, 62a, 62b) cooperating with a corresponding groove (42a) provided in the case in order to improve the positioning of the connector (51, 61) in the case.

11. The device according to any one of the above claims, characterized in that the single-pole or multipole electrical power apparatuses (3, 8, 9) are formed as required by circuit breakers, contactors, switches and remote-controlled switches, and that the auxiliary units (4, 5) comprise at least one fault indication SD and/or contact position CAOF module (7), an undervoltage MN or shunt MX trip module (6), and a differential tripping module (5).

12. The device according to any one of the above claims, characterized in that the connectors are integral parts of the end parts (40a) of the corresponding contact strips.

13. The device according to any one of the claims 1 to 12, characterized in that the connectors (51, 61) are securedly united for example by welding to the end parts (40a) of the corresponding contact strips.
